Europäisches Patentamt

(19) European Patent Office

Office européen des brevets

(11) Numéro de publication : **0 243 275 B1**

(12) # FASCICULE DE BREVET EUROPEEN

(45) Date de publication du fascicule du brevet :
**27.11.91 Bulletin 91/48**

(51) Int. Cl.⁵ : **C03C 25/02**

(21) Numéro de dépôt : **87400935.0**

(22) Date de dépôt : **23.04.87**

(54) **Procédé et dispositif de fabrication de fils de verre par étirage mécanique et produits en résultant.**

(30) Priorité : **24.04.86 FR 8605938**

(43) Date de publication de la demande :
**28.10.87 Bulletin 87/44**

(45) Mention de la délivrance du brevet :
**27.11.91 Bulletin 91/48**

(84) Etats contractants désignés :
**BE DE ES FR GB IT SE**

(56) Documents cités :
**FR-A- 2 073 472**
**US-A- 3 425 862**
**CHEMICAL ABSTRACTS, vol. 95, no. 18, 2
novembre 1981, page 296, résumé no. 155307r,
Columbus, Ohio, US; & JP-A-81 59 646
(SHIN-ETSU CHEMICAL INDUSTRY CO., LTD)
23-05-1981**

(56) Documents cités :
**CHEMICAL ABSTRACTS, vol. 103, no. 18,
novembre 1985, page 270, résumé no.
146197m, Columbus, Ohio, US; & JP-A-60 83
908 (NITTO ELECTRIC INDUSTRIAL CO., LTD)
13-05-1985**
**CHEMICAL ABSTRACTS, vol. 103, no. 12, 23
septembre 1985, page 261, résumé no. 91936u,
Columbus, Ohio, US; & JP-A-60 71 549 (NITTO
ELECTRIC INDUSTRIAL CO., LTD) 23-04-1985**

(73) Titulaire : **VETROTEX SAINT-GOBAIN**
**767 quai des Allobroges**
**F-73000 Chambéry (FR)**

(72) Inventeur : **Soszka, Barbara**
**32bis, avenue de Bassens**
**F-73000 Chambéry (FR)**
Inventeur : **Mahler, Jacques**
**3, rue Marc et Claude de Buttet**
**F-73000 Chambéry (FR)**
Inventeur : **Augier, Eric**
**180, avenue Costa de Beauregard**
**F-73000 Chambéry (FR)**

(74) Mandataire : **Breton, Jean-Claude et al**
**SAINT-GOBAIN RECHERCHE 39, quai Lucien
Lefranc**
**F-93300 Aubervilliers Cedex (FR)**

**Description**

La présente invention concerne un procédé et un dispositif de fabrication d'un fil de verre d'après lesquels on forme une multiplicité de fibres continues par étirage mécanique, on leur applique un apprêt susceptible d'être polymérisé et/ou réticulé sous l'action d'un rayonnement actinique et on provoque la polymérisation et/ou la réticulation, au moins partielle, dudit apprêt au niveau du fil obtenu par rassemblement desdites fibres, en cours d'étirage.

L'invention concerne également les produits obtenus selon ce procédé, produits dont l'une des caractéristiques éminentes est le niveau particulièrement élevé des propriétés physiques, en particulier mécaniques et thermiques et des propriétés chimiques.

Différents moyens ont déjà été mis en oeuvre par le passé pour améliorer les propriétés des fibres de verre, en particulier leurs propriétés mécaniques.

Ainsi, le brevet US-A-2 723 215 décrit un procédé qui consiste à protéger les fibres de verre de l'humidité atmosphérique dès leur formation. Cette protection est obtenue, pendant l'opération de fibrage, en déposant sur chaque fibre une quantité suffisante d'apprêt pour enrober complètement le fil formé par le rassemblement desdites fibres. La quantité d'apprêt déposée est de 4 à 30 % en poids et même plus.

La composition de cet apprêt est à base de cires naturelles ou synthétiques thermoplastiques, éventuellement additionnées de produits naturels ou synthétiques de haut poids moléculaire. Cet apprêt est déposé à l'état fondu sur les fibres et se solidifie simplement en se refroidissant.

D'après le brevet US-A-4 537 610, la technique précédente a été récemment appliquée à la fabrication de fils coupés directement sous la filière permettant la formation des fibres de verre. Les fils coupés, revêtus de l'apprêt thermoplastique qui reste malléable, sont écrasés lors de leur passage dans la machine de coupe. Il est nécessaire de réchauffer les fils écrasés, jusqu'à la température de ramollissement de l'apprêt, pour leur permettre de reprendre leur forme initiale.

Si le procédé décrit par le brevet US-A-2 723 215 est un moyen d'améliorer les propriétés mécaniques du fil obtenu, c'est au détriment d'autres propriétés. Ainsi, ledit fil est sensible à l'action de la chaleur et sa stabilité thermique est relativement faible.

Si le procédé précédent ne permet pas d'ajuster telle ou telle propriété du fil en vue d'une application particulière, il ne permet pas non plus d'obtenir directement certaines présentations dudit fil. Le brevet US-A-4 537 610, cité précédemment, fournit un exemple de l'inadaptation du procédé ; en effet, il n'est pas possible d'éviter l'écrasement du fil au moment de la coupe, ce défaut étant éliminé au prix d'un réchauffage ultérieur.

Dans le même domaine, le brevet US-A-3 425 862 décrit un procédé permettant de fabriquer un fil de verre continu, dont les filaments constitutifs sont individuellemnt enrobés d'une couche de résine thermoplastique et demeurent séparés. L'application du mélange organique, sous forme de solution en milieu solvant, est effectuée pendant l'opération de fibrage. Pour obtenir la séparation des filaments enrobés au niveau du fil il est nécessaire d'éliminer le solvant en chauffant les filaments pendant l'opération de fibrage.

Il est également connu, d'après la demande de brevet FR-A-2 073 472, de protéger individuellement les fibres en les enrobant d'un mélange réalisé à partir de monomères, d'oligomères ou de substances chimiques à bas ou haut poids moléculaire. Ce revêtement organique est entièrement ou partiellement polymérisé et/ou réticulé, par application d'un rayonnement d'électrons, dans des conditions quine sont pas précisées. Le mélange utilisé ne contient pas de photoamorceur ce qui peut expliquer que sa polymérisation demande parfois l'action conjuguée de la chaleur et de l'irradiation.

Dans le même ordre d'idée, le document Chemical Abstracts, vol. 95 - n° 18 - 2 novembre 1981 - page 296 - résumé n° 155307 r mentionne la possibilité d'imprégner un produit à base de fibres de verre, par exemple un tissu, par un mélange organique réagissant sous l'action de radiations U.V. La polymérisation du mélange paraît demander un temps assez long si l'on en juge d'après celui de l'exemple qui est de 10 minutes.

Dans un autre domaine, celui des fibres optiques, il est usuel de déposer à leur surface un mélange organique réagissant sous l'effet de radiations U.V. C'est ce que divulguent les documents suivants : Chemical Abstracts -vol. 103 - n° 18 - novembre 1985 - page 270 - résumé n° 146197m et Chemical Abstracts - vol. 103 - n° 12 - 23 septembre 1985 - page 261 - résumé n° 91936 u. Toutefois, la technique de fabrication des fibres optiques est différente à bien des égards de celle utilisée pour les fibres de verre continues ordinaires. En effet, les fibres optiques sont formées par l'étirage de l'extrémité ramollie à une température d'au moins 2000°C d'une préforme à base de silice. La fibre optique étirée a un diamètre d'au moins 120 micromètres et son refroidissement est nettement plus lent que celui des fibres de verre ordinaires d'un diamètre beaucoup plus faible. Ces conditions font que la vitesse d'étirage des fibres optiques est nettement plus faible que celle des fibres ordinaires. De plus, une seule fibre optique est étirée par préforme et la totalité de sa surface revêtue du mélange organique est soumise à l'action des radiations U.V. Ceci n'est pas le cas d'un fil formé de l'assemblage d'une multiplicité de fibres individuelles qui s'interposent entre au moins une partie du mélange organique

2

et les radiations U.V.

L'invention a pour objet de maintenir, à leur niveau le plus élevé, les propriétés mécaniques, thermiques et chimiques du fil formé par le rassemblement d'une multiplicité de fibres de verre obtenues par étirage mécanique.

L'invention a aussi pour objet de fournir les moyens de faire varier à volonté les différentes caractéristiques dudit fil, telles que sa raideur ou son intégrité.

Ces buts sont atteints grâce à un procédé qui consiste à étirer mécaniquement une multiplicité de fibres de verre à partir de filets de verre fondu s'écoulant d'une multiplicité d'orifices perforés à la base d'une filière, à revêtir lesdites fibres d'un apprêt pouvant se présenter sous forme de solution ou d'émulsion éventuellement aqueuse, comprenant notamment au moins un oligomère monoinsaturé ou polyinsaturé, au moins un photoamorceur et éventuellement au moins un solvant organique et/ou au moins un monomère mono ou polyinsaturé, à rassembler lesdites fibres de verre en au moins un fil et à soumettre ledit fil, toujours en cours d'étirage, à l'action d'au moins un rayonnement actinique.

Par rayonnement actinique, il faut entendre toutes les radiations susceptibles de produire des réactions chimiques comme, par exemple, l'ultra-violet, la radiation émise par un laser ou un faisceau d'électrons.

Le procédé selon l'invention s'applique, par définition, à des fibres de verre et des fils de verre qui se déplacent à des vitesses pouvant atteindre plusieurs dizaines de mètres par seconde.

A la vitesse d'étirage, première contrainte à laquelle doit se plier le procédé selon l'invention, s'ajoute une seconde contrainte : la distance relativement faible qui sépare le fond de la filière du dispositif d'étirage du fil. Cette distance, qui n'excède généralement pas cinq mètres, impose que les opérations de revêtement des fibres de verre par l'apprêt, de rassemblement desdites fibres en au moins un fil et de polymérisation et/ou réticulation de l'apprêt se déroulent en moins d'une seconde (pour éviter d'alourdir la description qui suit, ces deux sortes de transformations de l'apprêt seront résumées par le seul terme de polymérisation).

Cette question de temps domine les différents aspects du procédé selon l'invention, depuis la nature des composés chimiques entrant dans la formule de l'apprêt jusqu'au mode d'irradiation du fil imprégné, en passant par la quantité d'apprêt déposée.

Ainsi, le choix des oligomères est fait en fonction des propriétés finales du polymère obtenu après irradiation du fil, propriétés qui conditionnent les caractéristiques physiques et chimiques dudit fil, il est également guidé par la vitesse de polymérisation susceptible d'être atteinte.

Ces oligomères sont, par exemple, des polyesters acrylates, des amidons et celluloses modifiés, des époxy acrylates, des composés siliconés ou des uréthannes acrylates. Ils peuvent comporter des éléments activateurs, tels que le chlore.

Les oligomères peuvent être également choisis de manière à obtenir des apprêts dont la viscosité ne soit pas trop élevée. Pour ce faire, les oligomères peuvent être choisis parmi ceux dont la masse moléculaire est, de préférence, comprise entre 500 et 5000.

L'autre constituant important de l'apprêt est le photoamorceur. D'après l'invention, ce terme recouvre aussi bien les photoinitiateurs, c'est-à-dire des composés directement responsables de la scission intra-moléculaire, que les photosensibilisateurs, c'est-à-dire des composés responsables de l'activation de la molécule.

Dans le cadre de l'invention, l'apprêt peut contenir au moins un photoinitiateur ou au moins un photosensibilisateur ou un mélange des deux.

Lorsque la vitesse d'étirage est élevée et/ou lorsque le degré de polymérisation recherché est grand, il est préférable d'utiliser au moins un photoinitiateur. De même, lorsque l'apprêt contient un photoinitiateur et un photosensibilisateur, il est alors préférable d'introduire davantage du premier que du second.

Ainsi, par exemple, lorsque la vitesse d'étirage est supérieure ou égale à 15 m.s$^{-1}$, l'apprêt comprend au moins un photoinitiateur et éventuellement au moins un photosensibilisateur, la quantité totale des photoamorceurs introduits étant supérieure ou égale à 10 % en poids ; ce pourcentage est calculé par rapport au poids total d'oligomère et, le cas échéant, de monomère introduit.

Lorsque l'apprêt ne contient pas de photoinitiateurs mais seulement un ou plusieurs photosensibilisateurs, il est nécessaire d'ajouter un donneur d'hydrogène tel qu'une amine.

Les photoinitiateurs entrant dans la composition de l'apprêt sont, de préférence, la benzoïne, l'acétophénone ou la sulfonylacétophénone et leurs dérivés respectifs. Les photosensibilisateurs utilisés sont, de préférence, la benzophénone et ses dérivés ainsi que les thioxanthones.

La viscosité de l'apprêt peut être éventuellement ajustée grâce à au moins un solvant organique. La nature de ce dernier et la quantité de solvant nécessaire dépendent du (ou des) oligomère (s) entrant dans la composition de l'apprêt. De plus, le solvant choisi doit pouvoir être éliminé complètement lors de l'irradiation du fil ; sa température d'ébullition ne doit donc pas être trop élevée. Le dispositif d'enduction des fibres étant situé à proximité du fond de la filière chauffée par effet Joule, le solvant choisi ne doit pas présenter un point éclair et un point d'inflammation spontanée trop bas.

L'apprêt peut contenir également un ou plusieurs monomères, en présence ou non de solvants organiques. Comme ces derniers, les monomères ajoutés jouent un rôle de diluant et permettent d'ajuster la viscosité de l'apprêt. Mais ce sont des diluants réactifs qui participent à la réaction de polymérisation et sont choisis, comme les oligomères, en fonction des propriétés recherchées pour le polymère final. Ces monomères sont généralement des monomères acryliques monoinsaturés ou polyinsaturés.

L'apprêt peut comprendre aussi au moins un composé choisi parmi les produits suivants : un agent mouillant, un promoteur d'adhésion, un agent anti-retrait et un agent de pontage.

L'agent mouillant a pour fonction essentielle de favoriser la pénétration de l'apprêt entre les fibres et d'assurer l'homogénéité de sa répartition au sein du fil ; il s'agit par exemple de polyacrylate de diéthyle.

Le promoteur d'adhésion a pour fonction essentielle d'assurer la fixation de l'apprêt à la surface des fibres ; on utilise pour ce faire des composés tels que des dérivés méthacryliques et des silanes.

L'agent anti-retrait a pour but d'éviter que la surface des fibres de verre soit localement découverte et que l'apprêt se décolle de ladite surface ; cet agent est généralement un oligomère chloré ou un composé spirannique tel qu'un spiro orthocarbonate, un spiro orthoester ou un bicyclo orthoester. L'agent de pontage, qui facilite la liaison chimique entre l'apprêt et la surface de la fibre, est choisi parmi les silanes.

Le procédé selon l'invention permet d'obtenir un fil dont la résistance à la traction est la plus élevée possible. Ce résultat est atteint en déposant sur les fibres de verre, immédiatement après leur formation, une quantité suffisante d'apprêt pour isoler leur surface de l'atmosphère extérieure, chargée de vapeur d'eau. Le rassemblement de ces fibres ainsi enduites conduit à un fil parfaitement gainé par l'apprêt déposé.

Afin de réduire encore le risque de contact entre l'eau contenue dans l'atmosphère environnant habituellement le fond de la filière et la surface des fibres à peine formées, il est possible d'envoyer vers lesdites fibres un flux gazeux parfaitement desséché. Le gaz employé, qui peut être un gaz inerte tel que l'azote, est soufflé de préférence au niveau du fond de la filière. Par un effet d'entrainement dû à la vitesse d'étirage, une partie de ce gaz suit les fibres dans leur déplacement, au moins jusqu'au moment où elles sont revêtues de l'apprêt.

Si le respect de ces conditions permet bien de maintenir la résistance mécanique du fil à son niveau le plus élevé, il permet également de préserver la forte réactivité de la surface des fibres à peine formées. En effet, le fait d'environner les fibres d'un gaz sec, dès leur formation, diminue vraisemblablement la quantité d'eau adsorbée à leur surface. Quoiqu'il en soit, on constate que le degré de polymérisation de l'apprêt revêtant le fil est plus grand lorsque les fibres sont initialement entourées d'un gaz sec que lorsqu'elles ne le sont pas, toutes les autres conditions étant égales par ailleurs.

Il est également possible d'augmenter le degré de polymérisation de l'apprêt en maintenant le fil dans une atmosphère dénuée d'oxygène, au moins pendant son irradiation.

Le degré de polymérisation peut dépendre aussi d'autres facteurs comme le nombre et la grosseur des fibres constituant le fil ou la longueur d'onde du rayonnement utilisé pour l'irradier.

En effet, lorsque le fil imprégné est formé d'un grand nombre de fibres et/ou de fibres de gros diamètre, l'action du rayonnement sur l'apprêt situé au coeur dudit fil est faible, voire nulle. Lorsqu'il en est ainsi, le degré de polymérisation de l'apprêt n'est pas identique dans toute la masse du fil : l'apprêt au coeur du fil est très faiblement polymérisé, alors que celui situé en surface l'est totalement.

D'une façon générale, il n'est pas souhaitable d'obtenir un tel fil, car il va se former des discontinuités au sein de l'apprêt insuffisamment polymérisé.

Cependant, pour certaines applications, l'hetérogénéité de polymérisation d'un fil, de l'extérieur au centre du fil, peut constituer un atout important. Par exemple, il peut être intéressant d'obtenir de tels fils suffisamment polymérisés à l'extérieur pour permettre leur manipulation comme par exemple l'enroulement sans collage entre les fils, et dont l'apprêt situé à coeur subira ultérieurement un complément de polymérisation par un apport d'énergie, thermique par exemple.

Les inconvénients liés à une hétérogénéité de polymérisation et/ou réticulation de l'extérieur au coeur du fil peuvent être résolus par l'augmentation de l'intensité du rayonnement. Cependant, ce moyen peut ne pas donner entière satisfaction, car les dispositifs d'irradiation habituellement employés émettent des rayonnements dont le spectre des longueurs d'onde n'est pas forcément adapté aux domaines d'absorption des différentes substances constituant l'apprêt du fil et/ou à la composition de la fibre elle-même. D'autre part, des puissances d'irradiation excessives peuvent conduire à des effets opposés à ceux recherchés en favorisant la polymérisation à l'extérieur du fil par exemple.

L'un des moyens les plus efficaces consiste à juxtaposer deux rayonnements dont les longueurs d'onde, ou la répartion des longueurs d'onde, sont choisies en fonction des spectres d'absorption du verre et des constituants de l'apprêt.

La masse d'apprêt déposée est de préférence égale ou supérieure à 5 % de celle du fil. Pour obtenir un fil revêtu d'une grande quantité d'apprêt et/ou pour lui conférer des propriétés particulières, il est possible d'opérer en une seule étape ou de la manière suivante : après avoir soumis le fil à l'action d'un rayonnement acti-

4

nique, celui-ci est gainé d'une couche d'apprêt et soumis de nouveau à l'action d'un rayonnement actinique. Cette couche d'apprêt peut avoir la même composition que l'apprêt déposé préalablement sur les fibres ou une composition différente.

Les propriétés d'un fil, constitué d'une multiplicité de fibres de verre revêtues d'un apprêt, comme sa raideur, son intégrité (c'est-à-dire le degré de liaison des fibres entre elles) ou sa solubilité dans un solvant organique, tel que le styrène ou le toluène, dépendent du degré de polymérisation de l'apprêt et de la nature de la formulation de l'apprêt.

En utilisant l'un ou l'autre des moyens exposés ci-dessus, ou en combinant plusieurs d'entre eux, le procédé selon l'invention permet d'obtenir, à volonté, des fils dont la raideur, l'intégrité, la solubilité sont très grandes ou très faibles, en passant par tous les stades intermédiaires.

Le procédé selon l'invention sera mieux apprécié au travers de la description détaillée qui suit, illustrée par les figures telles que :
- la figure 1 est une vue frontale, schématique, de l'installation complète permettant de mettre en oeuvre l'invention,
- la figure 2 est une vue latérale, schématique, de l'installation représentée figure 1,
- la figure 3 est une coupe transversale, schématique, d'un mode de réalisation du dispositif d'irradiation du fil, équipant l'installation montrée figure 1,
- la figure 4 est une coupe longitudinale, schématique, du dispositif représenté figure 3,
- la figure 5 est une vue partielle, schématique, représentant en coupe la partie inférieure de la filière montrée figure 2.

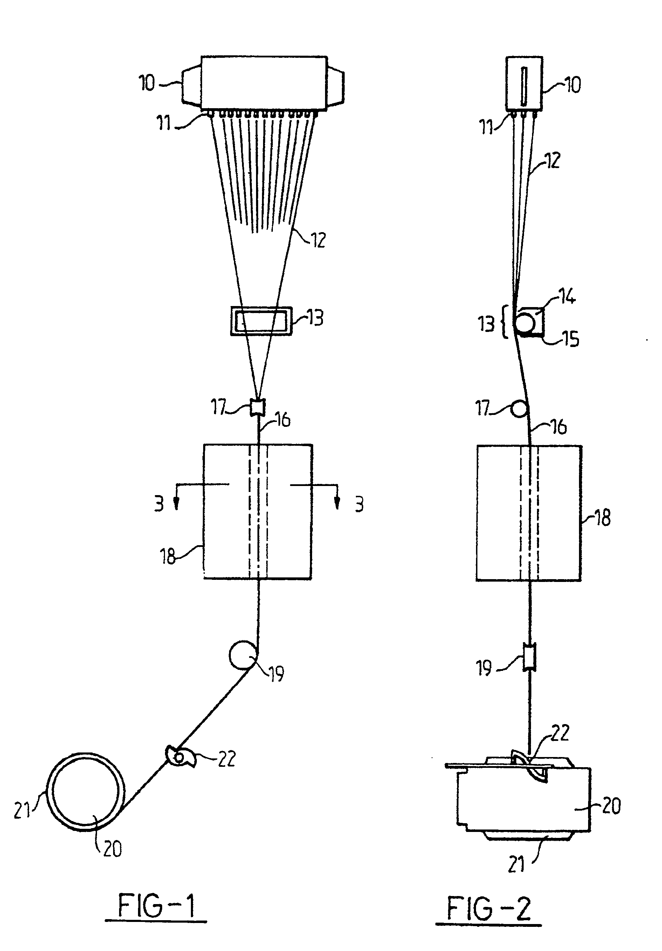

D'après les figures 1 et 2, l'installation autorisant la mise en oeuvre de l'invention comprend une filière 10 généralement en alliage métallique chauffée par effet Joule. Cette filière sert à refondre le verre ou à maintenir à l'état fondu le verre provenant d'une source non représentée.

Le fond de la filière 10 est percé d'un grand nombre d'orifices, prolongés ou non par des tubes 11 très petits appelés "tétons", d'où s'écoulent des filets de verre fondu. Ces filets sont étirés mécaniquement pour donner naissance à des fibres continues 12.

Ces fibres 12, formant au moins une nappe en évantail, passent sur un dispositif d'enduction 13 où elles sont enduites d'apprêt. Ce dispositif 13 peut être constitué d'un rouleau 14, dont la partie inférieure baigne dans un bain d'apprêt 15. Le rouleau 14 peut être associé à une lame calibrante non représentée de manière à former une couche d'apprêt régulière à la surface du rouleau. Un tel dispositif est décrit, par exemple, dans le brevet EP 0 002 006. Il est bien évident que l'apprêt peut être déposé sur les fibres 12 par tout autre moyen connu de l'homme du métier tel que pulvérisation, gudulette alimentée par une pompe doseuse, dispositif à mousse, qui lui apparaîtra le mieux adapté en fonction de la viscosité de l'apprêt et/ou de la quantité d'apprêt désirée sur lesdites fibres.

Il est également possible de déposer séparément sur les fibres 12 un ou plusieurs constituants de l'apprêt. Ainsi, il est possible de déposer un silane à l'aide du dispositif 13, puis les autres constituants à l'aide d'un second dispositif, identique au premier, disposé au-dessous de celui-ci.

Les fibres 12 ainsi enduites d'apprêt sont rassemblées en au moins un fil 16 par un organe tel qu'une roulette d'assemblage 17. Le fil 16 passe alors à l'intérieur du dispositif 18 où il est soumis à l'action d'un rayonnement actinique. A la sortie du dispositif 18, le fil 16 passe dans un organe de guidage, par exemple une roulette 19, avant d'être bobiné sur une broche 20 en rotation. Cette broche est mue par un moteur fixé dans un bâti non représenté. Le fil 16 est bobiné sous forme d'un enroulement 21 grâce à un organe de répartition 22 du fil 16.

A la sortie du dispositif d'irradiation 18, il est possible d'enduire le fil d'une couche d'apprêt grâce à un second dispositif d'enduction non représenté, qui est implanté, par exemple, au-dessous du dispositif 18. Le fil ainsi enduit sera soumis à l'action d'un rayonnement actinique en passant dans un second dispositif d'irradiation non représenté.

Il est bien évident que la présentation du fil peut varier en fonction de l'application à laquelle il est destiné. Ainsi, le fil 16 peut-il être étiré directement par une machine de coupe et transformé en fil coupé. Il peut être également étiré par un dispositif qui le répartit sur toute la largeur d'un tapis roulant, de manière à former un feutre de fils continus.

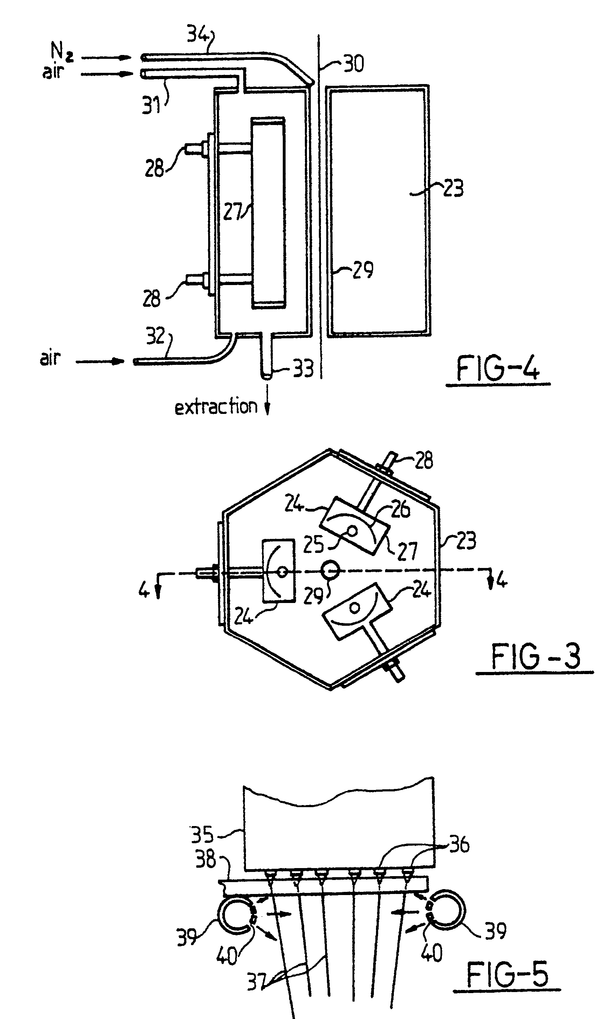

La structure du dispositif d'irradiation du fil est illustrée par les figures 3 et 4. Ce dispositif se compose d'une enceinte ventilée, de plusieurs sources émettrices de rayonnements ultra-violet et d'une armoire électrique de commande non représentée.

D'après la figure 3, l'enceinte est formée d'un caisson hexagonal 23 renfermant trois sources émettrices 24 disposées à 120° l'une par rapport à l'autre.

Chacune de ces sources est constituée d'un tube émetteur 25. Ce dernier peut être à haute, moyenne ou basse pression, excité au moyen d'électrodes ou de micro-ondes. Le tube émetteur est essentiellement choisi en fonction de son spectre d'émission. Il peut donc être dopé par des gaz rares ou des métaux selon le type de fabrication envisagé.

Un réflecteur semi-elliptique 26 est disposé à l'arrière du tube 25. Cet ensemble est monté sur un boitier 27 solidaire de la paroi du caisson 23 par l'intermédiaire de tiges coulissantes 28.

Un tube de silice 29 est disposé verticalement dans l'axe du caisson 23, sur toute sa hauteur. Le fil 30, guidé par les organes 17 et 19, défile dans l'axe du tube 29. Ce tube a pour but de protéger les émetteurs 25 contre les projections éventuelles d'apprêt. Il est également possible de protéger directement les émetteurs au moyen de fenêtres en silice ; dans ce cas, le tube 29 n'est plus indispensable.

Le caisson 23 est muni de conduits 31 et 32 à ses parties supérieure et inférieure. Ces conduits permettent de souffler de l'air servant à ventiler l'intérieur du caisson ; cet air est ensuite extrait par l'intermédiaire du conduit 33. Un autre conduit 34 débouchant au sommet du tube 29, permet éventuellement de délivrer un courant de gaz inerte, par exemple de l'azote.

Le fil peut être ainsi environné d'une atmosphère inerte dans toute la zone où il est soumis au rayonnement ultra-violet.

Les tiges 28 permettent de régler la distance séparant les tubes émetteurs 25 du fil 30. Le réglage est effectué de manière à ce que les foyers des réflecteurs semi-elliptiques 26 soient confondus avec le trajet du fil 30.

L'installation illustrée par les figures 1 et 2 peut être complétée par le dispositif représenté schématiquement figure 5. Cette dernière montre en coupe verticale, transversale, la partie inférieure d'une filière 35 munie de tétons 36 d'où sont étirées des fibres 37. Le fond de la filière est équipé d'une série d'ailettes de refroidissement 38, implantées régulièrement entre les rangées de tétons. Imédiatement au-dessous des ailettes sont implantées deux tubulures 39. Ces tubulures sont disposées de part et d'autre de la filière 35 parallèlement aux grands côtés de ladite filière. La paroi des tubulures 39 est percée d'une ou plusieurs rangées d'orifices ou de fentes dirigés vers la zone de fibrage.

Au cours de l'opération de fibrage, les tubulures 39 sont alimentées par un gaz sec, par exemple de l'azote. Ce gaz est soufflé par les orifices 40 en direction des fibres 37 et les environne dès leur formation. Du fait de l'appel d'air induit par le frottement des fibres 37 sur l'atmosphère environnante, l'enveloppe gazeuse formée autour d'elles les accompagne dans leur déplacement. Ce phénomène permet d'éviter ou de limiter considérablement le contact entre la surface des fibres et l'eau atmosphérique.

Un certain nombre d'essais ont été réalisés avec une installation comprenant un dispositif d'irradiation du fil similaire à celui décrit précédemment. La puissance du rayonnement délivré est variable ; elle est comprise, en général, entre 50 et 200 Watts par centimètre linéaire de tube émetteur. La longueur d'onde du rayonnement émis est comprise entre 200 et 420 nanomètres.

Le verre utilise est bien connu de l'homme du métier sous l'appellation verre E. L'apprêt a été déposé en une seule fois à l'aide d'un rouleau à lame calibrante, tel que décrit précédemment. La vitesse d'étirage adoptée pour les sept premiers exemples suivants est de 15 mètres par seconde.

Ces quelques exemples illustrent l'influence de la nature de l'apprêt sur le taux de polymérisation, toutes autres conditions étant sensiblement égales par ailleurs.

EXEMPLE 1.

La composition pondérale de l'apprêt est la suivante :

```
. Oligomère       : polyester tétracrylate (commercialisé
                    sous la référence "Ebecryl 810" par la
                    Société UNION CHIMIQUE BELGE)          77,2 %
. Photoinitiateur : benzyl diméthyl cétal                   7,8 %
. Solvant         : méthyl éthyl cétone                     15  %
              paf = 15,3 %                    TC = 42 %
    paf : quantité d'apprêt déposée sur le fil, exprimée en pourcentage
```

par rapport au poids de verre ;

TC : quantité d'apprêt polymérisé et/ou réticulé, exprimée en pourcentage pondéral par rapport à la quantité totale d'apprêt.

EXEMPLE 2.

La composition pondérale de l'apprêt est la suivante :

. Oligomère : epoxyacrylate (commercialisé sous la référence "Ebecryl 600" par la Société UNION CHIMIQUE BELGE) 55,8 %

. Monomère : hexane diol diacrylate 18,6 %

. Photoinitiateur : benzyl diméthyl cétal 10,6 %

. Solvant : méthyl éthyl cétone 15 %

paf = 15,6 % TC = 100 %

EXEMPLE 3.

La composition pondérale de l'apprêt est la suivante :

. Oligomère : polyester hexacrylate (commercialisé sous la référence "Ebecryl 830" par la Société UNION CHIMIQUE BELGE) 74,4 %

. Photoinitiateur : hydroxy-1-cyclohexyl phényl cétone 4 %

. Photosensibilisateur : benzophénone 6,6 %

. Solvant : méthyl éthyl cétone 15 %

paf = 19,9 % TC = 75 %

EXEMPLE 4.

La composition pondérale de l'apprêt est la suivante :

. Oligomère : polyester hexacrylate (Ebecryl 830) 74,4 %

. Photoinitiateur : hydroxy-1-cyclohexyl phényl cétone 5,3 %

. Photosensibilisateur : benzophénone 5,3 %

. Solvant : méthyl éthyl cétone 15 %

paf = 32,8 % TC = 85 %

raideur : forte intégrite : maximum

EXEMPLE 5.

La composition pondérale de l'apprêt est la suivante :

| . Oligomère | : epoxyacrylate (Ebecryl 600) | 55,8 % |
|---|---|---|
| . Monomère | : hexane diol diacrylate | 18,6 % |
| . Photoinitiateur | : hydroxy-1-cyclohexyl phényl cétone | 5,3 % |
| . Photosensibilisateur | : benzophénone | 5,3 % |
| . Solvant | : méthyl éthyl cétone | 15 % |

paf = 11,1 %                         TC = 43 %

raideur : forte

intégrité : très bonne

résistance à la rupture en traction : 82 g/tex

solubilité dans le toluène : 45 %

EXEMPLE 6.

La composition pondérale de l'apprêt est la suivante :

| . Oligomère | : epoxyacrylate (Ebecryl 600) | 55,8 % |
|---|---|---|
| . Monomère | : hexane diol diacrylate | 18,6 % |
| . Photoinitiateur | : 2 hydroxy-2 méthyl- 1 phényl propane-1-one | 10,6 % |
| . Solvant | : méthyl éthyl cétone | 15 % |

paf = 11,1 %                         TC = 46 %

raideur : forte

intégrité : très bonne

résistance à la rupture en traction : 88 g/tex

EXEMPLE 7.

La composition pondérale de l'apprêt est la suivante :

| . Oligomère | : epoxyacrylate (Ebecryl 600) | 55,8 % |
|---|---|---|
| . Monomère | : hexane diol diacrylate | 18,6 % |
| . Photoinitiateur | : hydroxy-1-cyclohexyl phényl cétone | 10,6 % |
| . Solvant | : méthyl éthyl cétone | 15 % |

paf = 16,4 %                         TC = 100 %

EXEMPLE 8.

L'apprêt a été déposé sur des fibres étirées à la vitesse de 20 $m.s^{-1}$ ; sa composition pondérale est la suivante :

- Oligomère            : polyester tétracrylate (Ebecryl 810)    76,92 %
- Photoinitiateur       : benzyl diméthyl cétal                 5,38 %
- Photosensibilisateur : benzophénone                       2,31 %
- Agent de pontage      : méthacryl silane                     0,39 %
- . Solvant                  : méthyl éthyl cétone               15,00 %

        paf = 13 %                          TC = 13 %

        résistance à la rupture en traction : 75 g/tex

        solubilité dans le toluène : 51 %

## EXEMPLE 9.

Cet exemple illustre l'influence positive d'un agent mouillant sur le taux de polymérisation.

- Oligomère        : polyester tétracrylate (Ebecryl 810)    77,27 %
- Photoinitiateur : hydroxy-1-cyclohexyl-phényl cétone      7,73 %
- Solvant           : méthyl éthyl cétone               15,00 %

        paf = 27 %         Ve = 15         TC = 50 %

- Agent mouillant : polyacrylate de diéthyle (commercialisé

                   sous la référence "Modaflow" par la

                Société MONSANTO)                   0,2 %

        paf = 29 %         Ve = 25         TC = 78 %

        paf = 30 %         Ve = 30         TC = 79 %

Ve : vitesse d'étirage en $m.s^{-1}$.

        raideur : très forte

        intégrité : maximum

        résistance à la rupture en traction : 70 g/tex

## EXEMPLE 10.

- Oligomère            : polyester hexacrylate (Ebecryl 830)    70     %
- Monomère              : triméthylol propane triacrylate       20     %
- Photoinitiateur       : hydroxy-1-cyclohexyl-phényl cétone    5     %
- Photosensibilisateur : benzophénone                         5     %

        paf = 8,5 %         Ve = 23         TC = 45 %

        paf = 18,7 %       Ve = 19         TC = 40 %

EXEMPLE 11.

| | | | |
|---|---|---|---|
| . Oligomère | : epoxy acrylate (Ebecryl 600) | 62,2 | % |
| . Monomère | : hexane diol diacrylate | 27,8 | % |
| . Photoinitiateur | : hydroxy-1-cyclohexyl phényl cétone | 10 | % |

paf = 23 %          TC = 90 %

EXEMPLE 12.

Les résultats donnés ci-après montrent l'influence respective de la vitesse d'étirage et de la concentration en photoamorceur sur le taux de polymérisation de l'apprêt observé sur le fil. Trois compositions d'apprêt ont été réalisées à partir des constituants utilisés dans l'exemple 1, selon les formulations suivantes :

| | | | | | | |
|---|---|---|---|---|---|---|
| . Ebecryl 810 | 80,2 % | | 77,2 % | | 73,9 % | |
| . Benzyl diméthyl cétal | 4,8 % | | 7,8 % | | 11,1 % | |
| . Méthyl éthyl cétone | 15,0 % | | 15,0 % | | 15,0 % | |
| Ve | TC | paf | TC | paf | TC | paf |
| 20 | 8 | 18 | 28 | 15 | 39 | 16 |
| 15 | 19 | 16 | 42 | 15 | 39 | 14 |
| 10 | 51 | 15 | 67 | 15 | 57 | 13 |

Il ressort de cette série de résultats deux constatations :

. le taux de polymérisation varie d'autant plus fortement avec la vitesse d'étirage que la quantité de photoinitiateur introduite dans l'apprêt est plus faible ;

. le taux de polymérisation varie relativement peu lorsque la quantité de photoinitiateur augmente, si la vitesse d'étirage reste faible.

EXEMPLE 13.

Les compositions d'apprêt selon l'invention peuvent contenir au moins un photoinitiateur et au moins un photosensibilisateur. Les résultats ci-après illustrent, dans le cadre de ces compositions, l'influence du rapport des concentrations de ces deux photoamorceurs sur le taux de polymérisation.

Comme dans l'exemple 11, trois compositions d'apprêt ont été réalisées avec les mêmes constituants, auxquels a été ajouté comme photosensibilisateur la benzophénone. Leurs formulations pondérales sont

| | | | | | | |
|---|---|---|---|---|---|---|
| . Ebecryl 810 | 80,2 % | | 77,4 % | | 77,2 % | |
| . Benzyl diméthyl cétal | 2,4 % | | 3,8 % | | 5,5 % | |
| . Benzophénone | 2,4 % | | 3,8 % | | 2,3 % | |
| . Méthyl éthyl cétone | 15,0 % | | 15,0 % | | 15,0 % | |
| Ve | TC | paf | TC | paf | TC | paf |
| 20 | 8 | 17 | 5 | 15 | 33 | 16 |
| 15 | 7 | 17 | 18 | 15 | 38 | 16 |
| 10 | 15 | 15 | 56 | 20 | 68 | 17 |

De cette série de résultats, il ressort que :

. à quantités égales de photoamorceurs, les apprêts contenant un photosensibilisateur et un photoinitiateur en égales proportions présentent un taux de polymérisation plus faible que ceux ne contenant qu'un photoinitiateur ;

. cette différence entre les deux catégories d'apprêts s'efface dès que le photoinitiateur est introduit en quantité plus importante que le photosensibilisateur.

EXEMPLE 14.

Cet exemple illustre l'influence d'une atmosphère inerte, anhydride sur le taux de polymérisation de l'apprêt. La composition de celui-ci est identique à celle de l'exemple 7. Les fibres de verre ont été étirées à la vitesse de 15 m.s$^{-1}$. L'azote a été soufflé en direction des fibres, dès leur formation, comme l'illustre la figure 5. Les résultats obtenus sont les suivants :

| Pression N$_2$ (en mbar) | paf | TC | résistance à la rupture (g/tex) |
|---|---|---|---|
| 0 | 17 | 55 | 80 |
| 25 | 19 | 79 | 94 |
| 30 | 19 | 72 | 96 |
| 35 | 18 | 86 | 96 |

Ces résultats montrent en particulier l'influence de l'azote sur la résistance à la rupture. A ce propos, précisons que la résistance à la rupture d'un fil identique, recouvert d'un ensimage classique est généralement comprise entre 60 et 70 g/tex.

EXEMPLE 15.

Ce dernier exemple illustre un type de composition d'apprêt plus complexe que celles mentionnées précédemment. Il a aussi comme but de montrer une application particulière du procédé direct selon l'invention : il s'agit de la fabrication directe d'un matériau composite prêt à l'emploi. Dans le cas présent, il s'agit d'un "jonc" tel qu'on en obtient habituellement par pultrusion.

La composition pondérale de l'apprêt est la suivante:

- Oligomères : epoxy acrylate (Ebecryl 600) — 53,70 %
  uréthane acrylage (Ebecryl 210) — 7,96 %
- Monomère : hexane diol diacrylate — 17,90 %
- Photoinitiateur : benzyl diméthyl cétal — 7,96 %
- Agent de pontage : méthacryl silane — 2,38 %
- Agent mouillant : polyacrylate de diéthyle — 0,10 %
- Solvant : méthyl éthyl cétone — 10,00 %

Ve = 0,7 m.s$^{-1}$     paf = 65 %     TC = 100 %

solubilité dans le toluène : 2 %

La présente invention s'applique à tous les verres, quelle que soit leur composition, susceptibles d'être transformés en fibres continues par étirage mécanique.

Les possibilités d'optimisation des caractéristiques du fil, offertes par le procédé selon l'invention, font de celui-ci un matériau de choix pour de nombreuses applications.

Ainsi, le fil fabrique selon le procédé précédemment décrit peut, grâce à l'ajustement de la composition de l'apprêt, être rendu compatible aussi bien avec les résines thermodurcissables qu'avec les résines thermoplastiques.

D'autre part, le procédé selon l'invention permet de fabriquer directement des produits semi-finis, par exemple les mèches de fils préimprégnés.

Enfin, le procédé selon l'invention permet de réaliser directement des produits composites finis, prêts à l'utilisation, comme le montre l'exemple 14.

Le fil obtenu par le procédé selon notre invention est donc particulièrement adapté pour renforcer des produits à base de matières organiques. Etant donné la protection du verre conférée par l'apprêt et les caractéristiques mécaniques du fil, ce dernier est également tout indiqué pour renforcer des produits formés à partir de matières minérales telles que le ciment.

## Revendications

1. Procédé de fabrication de fils de verre consistant à étirer mécaniquement une multiplicité de fibres de verre à partir de filets de verre fondu qui s'écoulent d'une multiplicité d'orifices perforés à la base d'une filière et selon lequel on revêt lesdites fibres d'un apprêt pouvant se présenter sous forme de solution ou d'émulsion éventuellement aqueuse, caractérisé en ce qu'on dépose un apprêt comprenant au moins un oligomère monoinsaturé ou polyinsaturé, au moins un photoamorceur et, éventuellement, au moins un solvant organique et/ou au moins un monomère monoinsaturé ou polyinsaturé, puis on rassemble lesdites fibres en au moins un fil, on soumet ledit fil, toujours en cours d'étirage, à l'action d'au moins un rayonnement actinique.

2. procédé selon la revendication 1, caractérisé en ce que l' (ou les) oligomère (s) est (sont) choisi (s) parmi les polyesters acrylates, les amidons et cellulose modifiés, les epoxyacrylates, les composés siliconés et les uréthannes acrylates.

3. Procédé selon l'une des revendications précédentes, caractérisé en ce que l' (ou les) oligomère (s) entrant dans la composition de l'apprêt a (ont) une masse moléculaire comprise entre 500 et 5000.

4. Procédé selon la revendication 1, caractérisé en ce que l'apprêt comprend au moins un photoamorceur choisi parmi les composés suivants : la benzoine, l'acétophénone, la benzophénone, la sulfonylacétophénone et leur dérivés respectifs ainsi que les thioxanthones.

5. Procédé selon la revendication 4, caractérisé en ce que, lorsque l'apprêt comprend au moins un photoinitiateur et au moins un photosensibilisateur, la quantité de photoinitiateur est supérieure à la quantité de photosensibilisateur.

6. procédé selon la revendication 1, caractérisé en ce que l'apprêt contient au moins un monomère acrylique.

7. Procédé selon la revendication 6, caractérisé en ce que l'apprêt contient au moins un monomère acrylique polyinsaturé.

8. Procédé selon la revendication 6, caractérisé en ce que l'apprêt contient au moins un des composés suivants : un agent mouillant, par exemple le polyacrylate de diéthyle ; un promoteur d'adhésion, par exemple un dérivé méthacrylique ; un agent anti-retrait, par exemple un composé spirannique ; un agent de pontage, par exemple un silane.

9. Procédé selon l'une des revendications précédentes, caractérisé par le fait qu'un ou plusieurs constituants de l'apprêt sont déposés séparément des autres.

10. Procédé selon l'une des revendications précédentes, caractérisé en ce que l'apprêt est déposé en quantité suffisante pour gainer complètement le fil formé par rassemblement des fibres de verre.

11. Procédé selon la revendication 10, caractérisé en ce que la masse d'apprêt déposée est supérieur ou égale à 5 % de celle du fil obtenu.

12. Procédé selon l'une des revendications 10 et 11, caractérisé en ce que, le fil ayant subi l'action d'un rayonnement actinique, on le revêt d'une couche d'apprêt, puis on le soumet de nouveau à l'action d'un rayonnement actinique.

13. Procédé selon la revendication 12, caractérisé en ce que la couche d'apprêt déposée n'a pas la même composition que l'apprêt déposé initialement sur les fibres de verre.

14. Procédé selon la revendication 1, caractérisé en ce que le fil est irradié par au moins un rayonnement dont la (ou les) longueur (s) d'onde est (sont) située (s) dans l'ultra-violet.

15. Procédé selon l'une des revendications 1 et 14, caractérisé en ce que le fil est irradié simultanément par deux rayonnements correspondant à des longueurs d'onde bien distinctes.

16. Procédé selon l'une des revendications 1 et 12, caractérisé en ce que le fil est maintenu au contact d'une atmosphère dénuée d'oxygène, au moins dans la zone où il est soumis au rayonnement actinique.

17. Procédé selon la revendication 16, caractérisé en ce que le fil est environné d'une atmosphère d'azote.

18. Procédé selon la revendication 1, caractérisé en ce que les fibres de verre sont entourées d'un flux gazeux anhydre, depuis leur formation jusqu'au moment où elles sont revêtues d'un apprêt.

19. Procédé selon la revendication 18, caractérisé en ce que le flux gazeux est formé d'un courant d'azote.

20. Dispositif de fabrication d'un fil continu (16, 30) formé par le rassemblement d'une multiplicité de fibres de verre (12, 31) comprenant une source d'alimentation en verre par simple gravité reliée à une filière fixe (10, 35), chauffée par effet Joule, dont la face inférieure est munie d'une multiplicité d'orifices (11, 36), au moins un dispositif d'enduction (13), des organes d'assemblage (17), de guidage (19) et de répartition (22) du fil ainsi que des organes d'étirage mécanique (20), caractérisé en ce qu'il comprend en outre au moins une source de rayonnement actinique (18) disposée entre l'organe d'assemblage (17) et les organes d'étirage (20).

21. Dispositif de fabrication selon la revendication 20, caractérisé en ce qu'il comprend au moins une source de rayonnements ultra-violet.

22. Fil obtenu par le procédé défini par l'une quelconque des revendications 1à 19.

23. produit composite formé à partir de matière (s) organique (s), caractérisé en ce qu'il est renforcé, au moins partiellement, par un fil tel que défini par la revendication précédente.

24. produit composite formé à partir de matière (s) minérale (s), caractérisé en ce-qu'il est renforcé, au moins partiellement, par un fil tel que défini par la revendication 22.


## Patentansprüche

1. Verfahren zur Herstellung von Glasfäden, das im mechanischen Ziehen einer Vielzahl von Glasfasern ausgehend von Strahlen aus geschmolzenem Glas, die sich durch eine Vielzahl von in die Basis einer Spinndüse perforierten Öffnungen ergießen, besteht und bei dem man diese Fasern mit einer Appretur beschichtet, die in Form einer gegebenenfalls wäßrigen Lösung oder Emulsion vorliegt, dadurch gekennzeichnet, daß man eine Appretur aufbringt, die wenigstens ein monoungesättigtes oder polyungesättigtes Oligomer, wenigstens einen Photopromotor und gegebenenfalls wenigstens ein organisches Lösungsmittel und/oder wenigstens ein monoungesättigtes oder polyungesättigtes Monomer umfaßt, man danach diese Fasern zu wenigstens einem Faden sammelt und man diesen Faden, immer im Verlauf des Ziehens, der Einwirkung wenigstens einer aktinischen Strahlung unterwirft.

2. Verfahren nach Anspruch 1, dadurch gekennzeichnet, daß das (oder die) Oligomer(en) aus Polyesteracrylaten, modifizierter Stärke und Zellulose, Epoxyacrylaten, Siliciumverbindungen und Urethanacrylaten ausgewählt ist (sind).

3. Verfahren nach einem der vorstehenden Ansprüche, dadurch gekennzeichnet, daß das (oder die) Oligomer(en) in der Appreturzusammensetzung eine Molekularmasse von 500 bis 5000 hat (haben).

4. Verfahren nach Anspruch 1, dadurch gekennzeichnet, daß die Appretur wenigstens einen unter den folgenden Verbindungen ausgewählten Photoinitiator umfaßt: Benzoïn, Acetophenon, Benzophenon, Sulfonylacetophenon und deren jeweilige Derivate sowie Thioxanthone.

5. Verfahren nach Anspruch 4, dadurch gekennzeichnet, daß wenn die Appretur wenigstens einen Photoinitiator und wenigstens einen Photosensibilisator enthält, die Menge an Photoinitiator größer als die Menge an Photosensibilisator ist.

6. Verfahren nach Anspruch 1, dadurch gekennzeichnet, daß die Appretur wenigstens ein Acrylmonomer enthält.

7. Verfahren nach Anspruch 6, dadurch gekennzeichnet, daß die Appretur wenigstens ein polyungesättigtes Acrylmonomer enthält.

8. Verfahren nach Anspruch 6, dadurch gekennzeichnet, daß die Appretur wenigstens eine der folgenden Verbindungen enthält: einen Weichmacher, beispielsweise Diethylpolyacrylat, einen Härtungsvermittler, beispielsweise ein Methacrylderivat, ein Antischwindmittel, beispielsweise eine Spiroverbindung, ein Überbrückungsmittel, beispielsweise ein Silan.

9. Verfahren nach einem der vorstehenden Ansprüche, dadurch gekennzeichnet, daß ein oder mehrere Bestandteile der Appretur getrennt von den anderen aufgebracht werden.

10. Verfahren nach einem der vorstehenden Ansprüche, dadurch gekennzeichnet, daß die Appretur in einer ausreichenden Menge aufgebracht wird, um den durch Sammeln der Glasfasern gebildeten Faden vollständig zu umgeben.

11. Verfahren nach Anspruch 10, dadurch gekennzeichnet, daß die aufgebrachte Appreturmasse größer oder gleich 5 % der des erhaltenen Fadens ist.

12. Verfahren nach einem der Ansprüche 10 und 11, dadurch gekennzeichnet, daß man den Faden, nachdem er der Einwirkung der aktinischen Strahlung unterworfen worden ist, mit einer Appreturschicht beschichtet und danach von neuem der Einwirkung der aktinischen Strahlung unterwirft.

13. Verfahren nach Anspruch 12, dadurch gekennzeichnet, daß die aufgebrachte Appreturschicht nicht die gleiche Zusammensetzung hat, wie die anfänglich auf den Glasfasern aufgebrachte Appreturschicht.

14. Verfahren nach Anspruch 1, dadurch gekennzeichnet, daß der Faden zumindest mit einer Strahlung bestrahlt wird, deren Wellenlänge(n) im Ultravioletten liegt (liegen).

15. Verfahren nach einem der Ansprüche 1 und 14, dadurch gekennzeichnet, daß der Faden gleichzeitig mit zwei Strahlungen mit wohlunterschiedenen Wellenlängen bestrahlt wird.

16. Verfahren nach einem der Ansprüche 1 und 12, dadurch gekennzeichnet, daß der Faden zumindest in der Zone, in der er der aktinischen Strahlung unterworfen wird, in Kontakt mit einer sauerstoffreien Atmosphäre gehalten wird.

17. Verfahren nach Anspruch 16, dadurch gekennzeichnet, daß der Faden von einer Stickstoffatmosphäre umgeben wird.

18. Verfahren nach Anspruch 1, dadurch gekennzeichnet, daß die Glasfasern von ihrer Bildung bis zum Moment, in dem sie mit der Appretur beschichtet werden, mit einem wasserfreien Gasstrom umgeben werden.

19. Verfahren nach Anspruch 18, dadurch gekennzeichnet, daß der Gasstrom von einem Stickstoffstrom gebildet wird.

20. Vorrichtung zur Herstellung eines Endlosfadens (16, 30), der durch daß Sammeln einer Vielzahl von Glasfasern (12, 31) gebildet wird, welche eine Quelle zur Versorung mit Glas durch einfache Schwerkraft, die mit einer festen Spinndüse (10, 35) verbunden ist, die durch den Joule-Effekt beheizt wird und deren Unterseite mit einer Vielzahl von Öffnungen (11, 36) ausgestattet ist, wenigstens eine Führungseinrichtung (13), Elemente zum Sammeln (17), zur Führung (19) und zur Verteilung (22) des Fadens wie auch mechanische Ziehelemente (20) umfaßt, dadurch gekennzeichnet, daß sie weiterhin wenigstens eine aktinische Strahlungsquelle (18) aufweist, die zwischen dem Sammelelement (17) und den Ziehelementen (20) angeordnet ist.

21. Vorrichtung zur Herstellung nach Anspruch 20, dadurch gekennzeichnet, daß sie wenigstens eine ultraviolette Strahlungsquelle aufweist.

22. Nach einem Verfahren, wie es in einem der Ansprüche 1 bis 19 definiert ist, erhaltener Faden.

23. Ausgehend von organischer Materie gebildetes Verbundprodukt, dadurch gekennzeichnet, daß es zumindest teilweise mit einem Faden gemäß Definition im vorstehenden Anspruch verstärkt ist.

24. Ausgehend von mineralischer Materie gebildetes Verbundprodukt, dadurch gekennzeichnet, daß es wenigstens teilweise mit einem Faden gemäß Definition in Anspruch 22 verstärkt ist.

## Claims

1. A method of producing glass threads consisting in mechanically drawing out a multiplicity of glass fibres from streams of molten glass which flow from a multiplicity of orifices provided in the base of a spinneret and according to which the said fibres are coated with a finish which may take the form of a possibly emulsion or solution, characterised in that there is deposited a finish comprising at least one monounsaturated or polyunsaturated oligomer, at least one photoprimer and possibly at least one organic solvent and/or at least one monounsaturated or polyunsaturated monomer, after which the said fibres are gathered into at least one thread, the said thread, still during the course of drawing, being subjected to the action of at least one actinic radiation source.

2. A method according to Claim 1, characterised in that the oligomer(s) is/are selected from among the acrylate polyesters, the modified cellulose and starches, the epoxy acrylates, the silicon compounds and the urethane acrylates.

3. A method according to one of the preceding Claims, characterised in that the oligomer(s) used in the composition of the finish has/have a molecular mass comprised between 500 and 5000.

4. A method according to Claim 1, characterised in that the finish comprises at least one photoprimer chosen from among the following compounds: benzoene, acetophenone, benzophenone, sulphonyl acetophenone and their respective derivatives as well as the thioxanthones.

5. A method according to Claim 4, characterised in that when the finish comprises at least one photoinitiator and at least one photosensitiser, the quantity of photoinitiator is greater than the quantity of photosensitiser.

6. A method according to Claim 1, characterised in that the finish contains at least one acrylic monomer.

7. A method according to Claim 6, characterised in that the finish contains at least one polyunsaturated acrylic monomer.

8. A method according to Claim 6, characterised in that the finish contains at least one of the following compounds: a wetting agent, for example diethyl polyacrylate, an adhesion promoter for example a methacrylic derivative, an anti-shrinking agent for example a spirannic compound, a bridging agent for example a silane.

9. A method according to one of the preceding Claims, characterised in that one or more constituents of the finish are separately deposited on the others.

10. A method according to one of the preceding Claims, characterised in that the finish is deposited in a sufficient quantity entirely to gain the thread formed by the gathering together of the glass fibres.

11. A method according to Claim 10, characterised in that the mass of finish deposited is greater than or equal to 5% of that of the thread obtained.

12. A method according to one of Claim 10 or 11, characterised in that when the thread has undergone the action of actinic radiation, it is coated with a layer of finish and then it is again subjected to the action of actinic radiation.

13. A method according to Claim 12, characterised in that the coating of finish deposited does not have the same composition as the finish initially deposited on the glass fibres.

14. A method according to Claim 1, characterised in that the thread is irradiated by at least one form of radiation of which the wavelength(s) is/are situated in the ultraviolet range.

15. A method according to one of Claims 1 and 14, characterised in that the thread is simultaneously irradiated by two systems of radiation corresponding to quite distinct wavelengths.

16. A method according to one of Claims 1 and 12, characterised in that the thread is maintained in contact with an atmosphere bereft of oxygen, at least in the zone in which it is subjected to actinic radiation.

17. A method according to Claim 16, characterised in that the thread is in an environment of a nitrogen atmosphere.

18. A method according to Claim 1, characterised in that the glass fibres are enclosed in an anhydrous gaseous flow from their formation until the moment when they are coated with a finish.

19. A method according to Claim 18, characterised in that the gaseous flow consists of a stream of nitrogen.

20. An apparatus for producing a continuous thread (16, 30) formed by a gathering together of a multiplicity of glass fibres (12, 31) comprising a source of supply of glass by simple gravity connected to a fixed spinneret (10, 35) heated by Joule's effect, the underside of which is provided with a multiplicity of orifices (11, 36), at least one coating device (13), means (17) of assembling, means (19) of guiding and means (22) of distributing the thread as well as mechanical drawing means (20), characterised in that it also comprises at least one source of actinic radiation (18) disposed between the assembly means (17) and the drawing means (20).

21. A production apparatus according to Claim 20, characterised in that it comprises at least one source of ultraviolet radiation.

22. A thread obtained by the method defined by any one of Claims 1 to 19.

23. A composite product formed from organic material(s), characterised in that it is at least partially reinforced by a thread such as defined by the preceding Claim.

24. A composite product formed from mineral material(s), characterised in that it is at least partially reinforced by a thread such as is defined by Claim 22.

FIG-1

FIG-2

EP 0 243 275 B1

FIG-4

FIG-3

FIG-5